# EUROPÄISCHE PATENTSCHRIFT

(11) **EP 3 107 305 B1**
(45) Veröffentlichungstag und Bekanntmachung des Hinweises auf die Patenterteilung: **09.09.2020**
(21) Anmeldenummer: 16174079.0
(22) Anmeldetag: 10.06.2016
(51) Int. Cl.: H04Q 9/00

(54) **SYSTEM UND VERFAHREN ZUM ERFASSEN VON SENSORDATEN IN EINEM KANAL**
SYSTEM AND METHOD FOR CAPTURING OF SENSOR DATA IN A CHANNEL
SYSTÈME ET PROCÉDÉ DE DÉTECTION DE DONNÉES DE CAPTEUR DANS UN CANAL

(30) Priorität: 15.06.2015 DE 102015109552
(43) Veröffentlichungstag der Anmeldung: 21.12.2016
(73) Patentinhaber: iPEK International GmbH, 87477 Sulzberg (DE)
(72) Erfinder: Kennerknecht, Gerhard, 87561 Oberstdorf (DE); Guggemos, Florian, 87435 Kempten (DE); Farbrizio, Tozzo, 87787 Wolfertschwenden (DE); Nagel, Thomas, 6992 Hirschegg (AT)
(74) Vertreter: 2s-ip Schramm Schneider Bertagnoll Patent- und Rechtsanwälte Part mbB

(56) Entgegenhaltungen:
- WO-A1-2009/078575
- WO-A1-2016/033653
- WO-A2-2014/115039
- DE-B3-102013 101 624
- US-A1- 2007 206 521
- US-A1- 2009 250 125
- US-A1- 2014 225 747
- US-A1- 2016 047 706

## Beschreibung

### Gebiet der Erfindung

Die Erfindung betrifft eine Sensoreinrichtung und ein Sensorsystem mit einer Anzahl von erfindungsgemäßen Sensoreinrichtungen zum Erfassen von Messgrößen in einem Kanal, sowie ein Verfahren zum Erfassen von Messgrößen in einem Kanal mit zumindest einer erfindungsgemäßen Sensoreinrichtung. Ferner betrifft die Erfindung die Verwendung einer Anzahl von erfindungsgemäßen Sensoreinrichtungen zum Erfassen von Messgrößen in einem Kanal gemäß dem erfindungsgemäßen Verfahren.

### Hintergrund der Erfindung

Es ist bekannt, mit Hilfe von Inspektionssystemen das Innere eines Kanals zu inspizieren und dabei mit Hilfe des Inspektionssystems Messwerte zu erfassen. Das Inspektionssystem wird hierfür in den Kanal eingebracht und entlang des Kanals verfahren. Beispielsweise kann das Inspektionssystem ein Fahrwagen mit daran angeordneten Sensoreinrichtungen umfassen. Beim Fortbewegen des Inspektionssystems in dem Kanal können fortlaufend Messwerte erfasst und beispielsweise in einer Speichereinrichtung des Inspektionssystems gespeichert werden. Nach Abschluss der Inspektion wird das Inspektionssystem aus dem Kanal genommen und die erfassten und aufgezeichneten Messwerte können mit Hilfe einer Auswerteeinrichtung ausgewertet und gegebenenfalls weiter verarbeitet werden.

Dieses Vorgehen hat allerdings den Nachteil, dass beispielsweise eine Ad-hoc-Überprüfung der Umgebungsbedingungen in dem Kanal bzw. der Kanaleigenschaften zeitaufwendig und kostspielig ist, weil für eine solche Ad-hoc-Überprüfung mit entsprechenden Sensoren ausgestattete Kanalinspektionssysteme in den Kanal eingebracht und dort entsprechend vorgeschoben bzw. verfahren werden müssen. Um Kosten zu sparen, wird daher versucht, so wenig wie möglich Kanalinspektionen durchzuführen bzw. das Intervall zwischen zwei Kanalinspektionen zu vergrößern. Dies bringt wiederum den Nachteil mit sich, dass Schäden oder sonstige Abweichungen von einem Normwert gegebenenfalls zu spät erkannt werden, was im schlechtesten Fall einen erhöhten Wartungsaufwand mit sich bringen kann.

Die US 2007/0206521 A1 zeigt eine Ausgestaltung eines Sensorknotens und den Betrieb eines Sensornetzwerkes aus einer Vielzahl solcher Sensorknoten. Die Sensorknoten können einen Sensor aufweisen, um beispielsweise den Durchfluss in einer Ölleitung zu messen. Die Sensorknoten können an der zu überwachenden Ölleitung angeordnet sein. Ein Sensorknoten besteht im Wesentlichen aus einem Mikrocontroller und aus einer mit dem Mikrocontroller gekoppelten Messeinheit, mit der physikalische Parameter gemessen werden können.

Die US 2009/0250125 A1 beschreibt ein Sensornetzwerk mit einer Anzahl von Sensorknoten, wobei die Sensorknoten in einen Schacht eingebracht werden können, und wobei die Sensorknoten und die jeweils dazugehörigen Sendeeinheiten als separate Einheiten ausgeführt sind.

Aus der US 2014/0225747 A1 ist eine Sensoreinrichtung mit einer drahtlosen Datenübertragung bekannt, die für Bewässerungsanlagen verwendet werden, wobei die Sensoreinrichtung außen an einer Tropfleitung angeordnet ist, derart, dass die Tropfleitung durch die Sensoreinrichtung hindurchgeführt ist.

Aus der WO 2014/115039 A2 ist eine Vorrichtung zum Detektieren von Lecks in einem Rohrnetz bekannt. Die Sensoreinrichtungen der Vorrichtung sind hierbei an der Kanalaußenwand befestigt, etwa mittels eines Metallringes oder eines Magneten.

Aus der DE 10 2013 101 624 B3 ist ein Rohrinspektionssystem mit drahtloser Datenübertragung bekannt. Das System besteht im Wesentlichen aus einer ersten und einer zweiten Sende-/Empfangseinheit und aus einer Anzahl von Repeatern, die zwischen der ersten und der zweiten Sende-/Empfangseinheit angeordnet sein können. Die Repeater können an vorbestimmten Stellen im Rohr abgesetzt werden und gegebenenfalls im Rohr verbleiben.

Aus der US 2016/0047706 A1 ist ein Sensorelement bekannt, mit dem Vibrationen eines Rohres detektiert werden können. Das Sensorelement weist einen Sensor, eine Speichereinrichtung, eine Datenverarbeitungseinheit und eine Sendeeinheit auf. Die Speichereinrichtung, die Datenverarbeitungseinheit und die Sendeeinheit können in einem fluid- und gasdichten Gehäuse untergebracht sein. Das Sensorelement wird außen am Rohr befestigt.

Aus der WO 2016/033653 A1 ist ein System bekannt, mit dem beispielsweise der Wasserstand eine wasserführenden Kanals detektiert werden kann. Das System wird in dem Kanalschacht angeordnet. Eine Telemetrieeinheit des Systems ist wasserdicht ausgestaltet, wobei die Sensorelemente selbst über Verbindungsleitungen mit der Telemetrieeinheit verbunden sind.

### Aufgabe der Erfindung

Aufgabe der vorliegenden Erfindung ist es daher, die aus dem Stand der Technik bekannten Nachteile zumindest teilweise zu vermeiden und Lösungen bereitzustellen, mit denen die Anzahl von Kanalinspektionen mit herkömmlichen Inspektionssystemen reduziert werden kann, wobei dennoch eine effektive Überwachung des Kanals ermöglicht wird.

### Erfindungsgemäße Lösung

Erfindungsgemäß wird diese Aufgabe mit einer Sensoreinrichtung zum Erfassen von Messgrößen in einem Kanal, einem Sensorsystem mit einer Anzahl von erfindungsgemäßen Sensoreinrichtungen, einem Verfahren zum Erfassen von Messgrößen in einem Kanal und durch die Verwendung einer Anzahl von erfindungsgemäßen Sensoreinrichtungen zum Erfassen von Messgrößen in einem Kanal gemäß dem erfindungsgemäßen Verfahren nach den unabhängigen Ansprüchen gelöst. Vorteilhafte Weiterbildungen und Ausgestaltungen der Erfindung sind in den jeweiligen abhängigen Ansprüchen angegeben.

Bereitgestellt wird demnach eine Sensoreinrichtung zum Erfassen von Messgrößen in einem Kanal, wobei die Sensoreinrichtung angepasst ist, dauerhaft im Kanal zu verbleiben, wobei die Sensoreinrichtung zumindest aufweist:
- zumindest ein Sensorelement zum Detektieren von zumindest einer Messgröße;
- eine mit dem zumindest einem Sensorelement gekoppelte Datenverarbeitungseinrichtung zum Verarbeiten und/oder Aufbereiten der von dem zumindest einem Sensorelement detektierten Messgrößen;
- ein mit der Datenverarbeitungseinrichtung gekoppeltes Sendemodul mit einer Antenne zum drahtlosen Übertragen der verarbeiteten und/oder aufbereiteten Messgrößen als Messdaten an eine zweite Sensoreinrichtung und/oder an eine Abfrageeinrichtung;
- eine Energieversorgungseinheit zum Versorgen des zumindest einen Sensorelements, der Datenverarbeitungseinrichtung und des Sendemoduls mit elektrischer Energie;
wobei die Sensoreinrichtung ein Gehäuse aufweist, das das zumindest eine Sensorelement, die Datenverarbeitungseinrichtung, das Sendemodul und die Energieversorgungseinheit aufnimmt, wobei das Gehäuse fluid- und luftdicht ausgestaltet ist, und wobei das Gehäuse angepasst ist, in dem Kanal an der Kanalinnenwandung befestigt zu werden.

Durch die dauerhafte Anordnung der Sensoreinrichtung in dem Kanal und die drahtlose Übertragung der Messgrößen als Messdaten an eine zweite Sensoreinrichtung und/oder an eine Abfrageeinrichtung ist eine dauerhafte bzw. weitgehend permanente Überwachung des Kanals möglich, ohne dass hierfür mobile Inspektionssysteme in den Kanal eingeführt werden müssen. So können beispielsweise mit Hilfe der Abfrageeinrichtung die von der Sensoreinrichtung erfassten Messgrößen drahtlos abgefragt werden, wobei die Abfrageeinrichtung außerhalb des Kanals verbleiben kann.

Durch die drahtlose Übertragung der Messdaten an eine zweite Sensoreinrichtung ist es erfindungsgemäß möglich, die Messdaten über mehrere Sensoreinrichtungen hinweg drahtlos an die Abfrageeinrichtung zu übertragen. Dadurch wird vermieden, dass die Abfrageeinrichtung die Messdaten einer Sensoreinrichtung nicht abfragen kann, wenn etwa der Abstand zwischen der Sensoreinrichtung und der Abfrageeinrichtung für eine drahtlose Datenübertragung zu groß ist.

Auf das Einbringen von Inspektionssystemen, etwa ein Fahrwagen mit daran angeordneten Sensoren, kann so weitgehend verzichtet werden. Derartige mobile Inspektionssysteme müssen nur noch dann in den Kanal eingebracht werden, wenn beispielsweise aufgrund gesetzlicher Vorgaben eine solche Inspektion unabdingbar ist oder wenn die von den Sensoreinrichtungen übertragenen Messdaten eine zusätzliche Inspektion mit einem mobilen Inspektionssystem notwendig erscheinen lassen. Die Anzahl aufwendiger und kostspieliger Kanalinspektionen mit derartigen mobilen Inspektionssystemen kann so erheblich reduziert werden, ohne Nachteile bei der Wartung aufgrund längerer Inspektionsintervalle hinnehmen zu müssen.

Das zumindest eine Sensorelement kann ausgewählt sein aus der Gruppe umfassend Temperatursensor, Durchflusssensor, Füllstandssensor, Drucksensor, Schallsensor, Gassensor, Sensor zum Erfassen einer Wasserqualität und/oder einer Schadstoffbelastung, Bildsensor, und Kombinationen hiervon.

Die Datenverarbeitungseinrichtung kann als Mikrocontroller, als Mikroprozessor oder als FPGA (Field Programmable Gate Array) ausgestaltet sein.

In einer Ausgestaltung der Erfindung kann die Energieversorgungseinheit eine Batterie oder einen Akkumulator umfassen.

Vorteilhaft ist es, wenn die Energieversorgungseinrichtung eine Einrichtung zur Gewinnung von elektrischer Energie aus der Umgebung der Sensoreinrichtung aufweist, insbesondere aus der Umgebungstemperatur und/oder aus dem Luftstrom in dem Kanal.

Die Einrichtung zur Gewinnung von elektrischer Energie kann mit dem Akkumulator gekoppelt sein, um den Akkumulator aufzuladen.

In einer weiteren Ausgestaltung der Erfindung kann die Sensoreinrichtung ein Empfangsmodul mit einer Antenne aufweisen zum drahtlosen Empfangen von Messdaten von einer dritten bzw. weiteren Sensoreinrichtung, wobei das Empfangsmodul und das Sendemodul vorzugsweise als eine ein Sende-/Empfangsmodul mit einer Antenne ausgebildete Einheit ausgestaltet sind, und wobei die Sensoreinrichtung angepasst ist, die empfangenen Messdaten in einem Datenspeicher der Sensoreinrichtung zu speichern und/oder an die zweite Sensoreinrichtung und/oder an die Abfrageeinrichtung zu übertragen.

Damit können von einem Sensormodul bereitgestellte Messdaten über mehrere Sensoreinrichtungen hinweg bis an eine Abfrageeinrichtung übertragen werden. Ist eine solche Übertragung zwischenzeitlich nicht möglich, etwa weil die aktuellen Umgebungsbedingungen in dem Kanal eine drahtlose Übertragung nicht zulassen, können die Messdaten in der Speichereinrichtung der Sensoreinrichtung zwischengespeichert und zu einem späteren Zeitpunkt übertragen werden. Dadurch ist gewährleistet, dass Messdaten, die nicht übertragen werden können, nicht verloren gehen.

Die Datenverarbeitungseinrichtung und das Sendemodul können angepasst sein, die Messdaten als zumindest ein Datenpaket zu übertragen, wobei das Datenpaket einen Header und einen Payload aufweist, wobei in dem Header zumindest eine eindeutige Kennung der Sensoreinrichtung und in dem Payload zumindest die Messdaten enthalten sind. Insbesondere bei einer Übertragung der Messdaten über mehrere Sensoreinrichtungen hinweg ist so gewährleistet, dass die Messdaten von der Abfrageeinrichtung der richtigen Sensoreinrichtung zugeordnet werden können.

In einer vorteilhaften Ausgestaltung ist die Sensoreinrichtung angepasst, zwischen einem Ruhemodus und einem Aktivmodus zu wechseln. Dadurch kann der Energieverbrauch der Sensoreinrichtung erheblich reduziert werden.

Vorteilhaft ist hierbei, wenn die Sensoreinrichtung angepasst ist, zyklisch zwischen dem Ruhemodus und dem Aktivmodus zu wechseln und/oder nach Empfang eines Triggersignals von dem Ruhemodus in den Aktivmodus zu wechseln, wobei das Triggersignal vorzugsweise eine Kennung der zu aktivierenden Sensoreinrichtung aufweist. Mit dem Triggersignal kann die Übertragung von Messdaten von einer ausgewählten Sensoreinrichtung angefordert werden.

Das Aktivieren der Sensoreinrichtung mit Hilfe eines Triggersignals hat den Vorteil, dass die Sensoreinrichtung nur dann in den Aktivmodus, der im Vergleich zu dem Ruhemodus einen erhöhten Energieverbrauch aufweist, wechselt, wenn eine Übertragung der Messdaten angefordert wird.

Vorteilhaft ist es, wenn der Sensoreinrichtung eine Sensorkennung zugeordnet ist, wobei die Sensoreinrichtung angepasst ist, ein empfangenes Triggersignal weiterzuleiten, wenn die Kennung der zu aktivierenden Sensoreinrichtung nicht der Sensorkennung entspricht, wobei die Sensoreinrichtung weiter angepasst ist, ein empfangenes Datenpaket gemäß einer vorbestimmten Route weiterzuleiten.

Dadurch ist einerseits gewährleistet, dass das Triggersignal die in dem Triggersignal angegebene Sensoreinrichtung (das Triggersignal enthält die Kennung der zu aktivierenden Sensoreinrichtung) erreicht. Andererseits wird dadurch gewährleistet, dass ein von der Sensoreinrichtung gesendetes Datenpaket, das über mehrere Sensoreinrichtungen weitergeleitet wird, auch die Abfrageeinrichtung erreicht. Der Energieverbrauch der Sensoreinrichtungen kann so ebenfalls reduziert werden, weil eine Sensoreinrichtung, die ein Datenpaket empfängt, dieses nicht weiterleiten muss, wenn diese Sensoreinrichtung nicht Bestandteil der vorbestimmten Route ist.

In einer vorteilhaften Ausgestaltung ist es vorgesehen, wenn die Sensoreinrichtung angepasst ist, nach dem Empfang eines Triggersignals für eine vorbestimmte Zeit in dem Aktivmodus zu bleiben. Dies ist insbesondere dann vorteilhaft, wenn die Sensoreinrichtung das empfangene Triggersignal weiterleitet und die Sensoreinrichtung Teile der vorbestimmten Route ist. Die Sensoreinrichtung bleibt so in dem Aktivmodus um ein Datenpaket zu empfangen und weiterzuleiten.

Besonders vorteilhaft ist es, wenn die Sensoreinrichtung eine Einrichtung zum Bereitstellen von Lokationsdaten, die die geographische Lokation der Sensoreinrichtung angeben, insbesondere die Lokation der Sensoreinrichtung in dem Kanal, aufweist. Die Lokationsdaten können zusammen mit den Messdaten an die zweite Sensoreinrichtung und/oder an eine Abfrageeinrichtung übertragen werden. Alternativ können die Messdaten die Lokationsdaten umfassen, d.h. die Lokationsdaten können Bestandteil Messdaten sein.

Das Vorsehen solcher Lokationsdaten hat den Vorteil, dass die übertragenen Messdaten anhand der Kennung der Sensoreinrichtung nicht nur einer bestimmten Sensoreinrichtung zugeordnet werden können, sondern auch einer bestimmten Lokation in dem Kanal. Das ist insbesondere dann von Vorteil, wenn die Sensoreinrichtung ihre Position in dem Kanal verändert, etwa weil sie sich von der Kanalwandung gelöst hat.

Bereitgestellt wird ferner ein Sensorsystem zum Erfassen von Messgrößen in einem Kanal, aufweisend eine Anzahl von erfindungsgemäßen Sensoreinrichtungen, wobei die Sensoreinrichtungen in vorbestimmten Abständen ortsfest und dauerhaft im Kanal anordenbar sind, wobei der Abstand zwischen jeweils zwei Sensoreinrichtungen so gewählt ist, dass zwischen ihnen eine drahtlose Kommunikationsverbindung zum Übertragen der Messgrößen eingerichtet werden kann.

Zumindest eine Sensoreinrichtung der Anzahl der Sensoreinrichtungen kann als Master-Sensoreinrichtung ausgebildet sein und die übrigen Sensoreinrichtungen der Anzahl von Sensoreinrichtungen können als Slave-Sensoreinrichtungen ausgebildet sein, wobei die Slave-Sensoreinrichtungen angepasst sind, detektierte Messgrößen an die Master-Sensoreinrichtung zu übertragen und wobei die Master-Sensoreinrichtung angepasst ist, die empfangenen Messgrößen zu speichern und/oder an eine Abfrageeinrichtung des Sensorsystems zu übertragen.

Bereitgestellt wird des Weiteren ein Verfahren zum Erfassen von Messgrößen in einem Kanal, wobei in dem Kanal zumindest eine erste erfindungsgemäße Sensoreinrichtung und eine zweite erfindungsgemäße Sensoreinrichtung beabstandet zueinander und ortsfest und dauerhaft angeordnet werden, wobei zumindest die erste Sensoreinrichtung Messgrößen detektiert und die detektierten Messgrößen als Messdaten drahtlos an die zweite Sensoreinrichtung und/oder an eine Abfrageeinrichtung überträgt, und wobei die Sensoreinrichtungen an der Innenwandung des Kanals angeordnet sind.

Die Abfrageeinrichtung kann hierbei ein Triggersignal aussenden, welches von der ersten und/oder von der zweiten Sensoreinrichtung empfangen wird, wobei nach dem Empfangen des Triggersignals die jeweilige Sensoreinrichtung, vorzugsweise in Abhängigkeit von den mit dem Triggersignal übertragenen Informationen, die Messdaten überträgt. Damit kann in vorteilhafter Weise eine Sensoreinrichtung aus einer Anzahl von Sensoreinrichtungen mit Hilfe des Triggersignals ausgewählt bzw. aktiviert werden und die aktivierte Sensoreinrichtung zur Übertragung der Messdaten veranlasst werden.

Die Sensoreinrichtung kann nach dem Empfangen des Triggersignals von einem Ruhemodus in einen Aktivmodus, in dem die Messdaten übertragen werden, wechseln und nach dem Übertragen der Messdaten in den Ruhemodus wechseln.

In einer Ausgestaltung des erfindungsgemäßen Verfahrens kann die Sensoreinrichtung im Ruhemodus Messgrößen detektieren und in einem Datenspeicher der jeweiligen Sensoreinrichtung mindestens so lange Zwischenspeichern, bis die Sensoreinrichtung in den Aktivmodus wechselt.

Ferner wird durch die Erfindung die Verwendung einer Anzahl von erfindungsgemäßen Sensoreinrichtungen zum Erfassen von Messgrößen in einem Kanal gemäß dem erfindungsgemäßen Verfahren bereitgestellt, wobei die erfassten Messgrößen als Messdaten an eine außerhalb des Kanals angeordnete Abfrageeinrichtung übertragen werden können. Vorteilhaft ist es hier bei, wenn die Messdaten Lokationsdaten umfassen, die die geographische Lokation der jeweiligen Sensoreinrichtung angeben.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: einen Kanal mit einer Anzahl darin angeordneter erfindungsgemäßer Sensoreinrichtungen und einer außerhalb des Kanals angeordneten Abfrageeinrichtung;
- Fig. 2: ein Blockschaltbild einer erfindungsgemäßen Sensoreinrichtung gemäß einem Ausführungsbeispiel;
- Fig. 3: drei unterschiedliche Beispiele eines Datenpakets zur Übertragung von Messdaten;
- Fig. 4: ein Ablaufdiagramm eines erfindungsgemäßen Verfahrens zum Erfassen und Übertragen von Messgrößen; und
- Fig. 5: ein Beispiel zum Übertragen von Messdaten zwischen einer Sensoreinrichtung und einer Abfrageeinrichtung, wobei die Messdaten gemäß einer vorbestimmten Route übertragen werden.

### Detaillierte Beschreibung der Erfindung

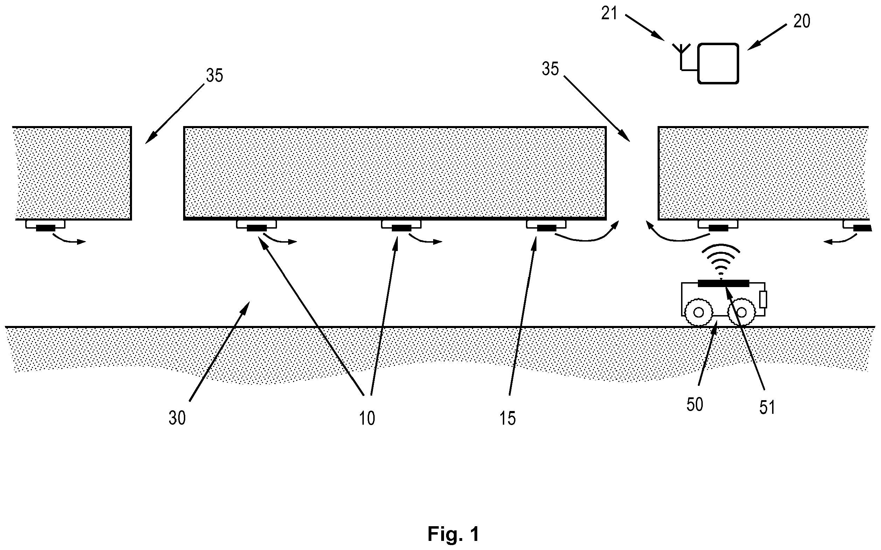

**Fig. 1** zeigt einen Kanal 30 mit darin angeordneten Sensoreinrichtungen 10, 15 und einer außerhalb des Kanals 30 angeordneten Abfrageeinrichtung 20.

Die Sensoreinrichtungen 10, 15 weisen jeweils ein oder mehrere Sensorelemente auf, die in einem Gehäuse, vorzugsweise luft- und fluiddicht angeordnet sind. Ferner weisen die Sensoreinrichtungen jeweils ein Sende-/Empfangsmodul mit einer zugehörigen Sende-/Empfangsantenne auf zur drahtlosen Übertragung der Messdaten. Die Sensoreinrichtungen 10, 15 sind in dem hier gezeigten Beispiel an der Innenwandung des Kanals 30 angeordnet. Die Anordnung der Sensoreinrichtungen 10, 15 relativ zueinander erfolgt derart, dass zwischen jeweils zwei benachbarten Sensoreinrichtungen eine drahtlose Kommunikationsverbindung (z.B. WLAN-Verbindung, Bluetooth, Bluetooth Low Energy) eingerichtet werden kann.

Die in dem Kanal 30 angeordneten Sensoreinrichtungen 10, 15 bilden zusammen ein Netzwerk von Sensoreinrichtungen, das es einem Anwender erlaubt, mit Hilfe der Abfrageeinrichtung 20 von den Sensoreinrichtungen detektierten Messgrößen abzufragen, ohne hierbei ein Inspektionssystem in den Kanal 30 einbringen zu müssen. Die hier außerhalb des Kanals angeordnete Abfrageeinrichtung 20 kann selbstverständlich auch über den Schacht 35 in den Kanal 30 gebracht werden. Dies ist insbesondere dann vorteilhaft, wenn die Sendeleistung der in der Nähe des Schachtes 35 angeordneten Sensoreinrichtungen nicht oder nicht vollständig ausreicht, um eine sichere Datenübertragung von diesen Sensoreinrichtungen zur Abfrageeinrichtung 20 zu gewährleisten.

Anhand der drei Sensoreinrichtungen 10, 15, die im Kanal 30 zwischen den beiden Schächten 35 angeordnet sind, wird die Funktionsweise der Sensoreinrichtungen näher beschrieben. Die linke der drei Sensoreinrichtungen detektiert mit seinem Sensorelement Messgrößen, die mittels ihres Sendemoduls drahtlos an die benachbarte (die mittlere der drei) Sensoreinrichtung übertragen werden. Die mittlere der drei Sensoreinrichtungen nimmt die übertragenen Messgrößen entgegen und überträgt diese ihrerseits an die nächste (die rechte der drei) Sensoreinrichtung. Die Sensoreinrichtung 15 ist hier als sogenannte Master-Sensoreinrichtung ausgestaltet, die die Messdaten bzw. Messgrößen von den benachbarten Sensoreinrichtungen 10 entgegennimmt und drahtlos an die Abfrageeinrichtung 20 überträgt. Sofern die Übertragung von der Master-Sensoreinrichtung 15 an die Abfrageeinrichtung 20 nicht möglich ist, etwa weil keine Abfrageeinrichtung 20 vorhanden ist, kann die Master-Sensoreinrichtung 15 die empfangenen Messdaten in einem Datenspeicher zwischenspeichern und zu einem späteren Zeitpunkt an die Abfrageeinrichtung 20 übertragen.

Bei ausreichender Sendeleistung können die drei Sensoreinrichtungen 10, 15 die detektierten Messgrößen auch direkt, das heißt ohne Zwischenschaltung der benachbarten Sensoreinrichtungen, an die Abfrageeinrichtung 20 übertragen. Unter Zwischenschaltung einer oder mehrerer Sensoreinrichtungen kann die für die drahtlose Datenübertragung benötigte elektrische Energie jedoch erheblich reduziert werden, was insgesamt zu einem geringeren Energieverbrauch des gesamten Sensorsystems führt.

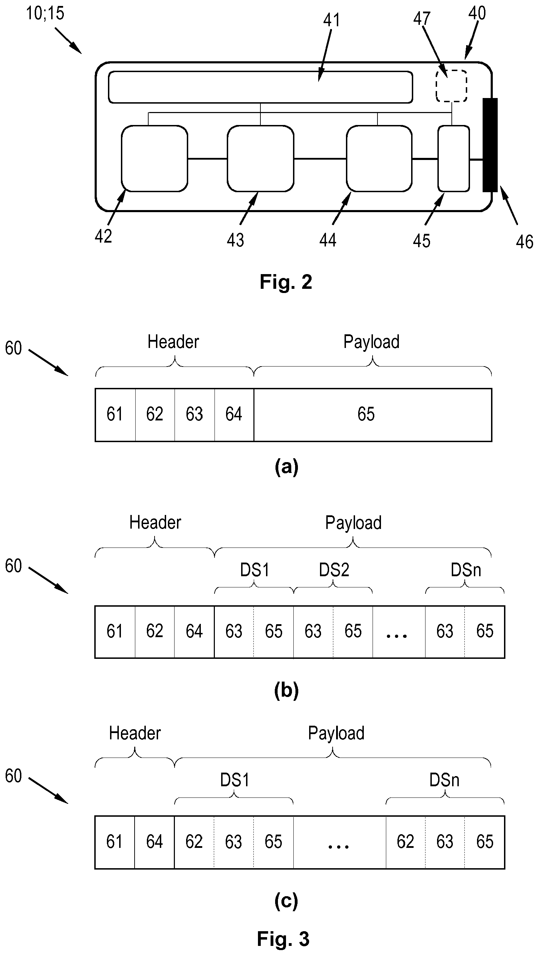

Die von einer Sensoreinrichtung 10, 15 an die Abfrageeinrichtung 20 übertragenen Messdaten enthalten vorzugsweise eine eindeutige Kennung der jeweiligen Sensoreinrichtung, sodass die Abfrageeinrichtung 20 die Messdaten der richtigen Sensoreinrichtung zuordnen kann. Die Ausgestaltung von Datenpaketen, mit denen die Messdaten übertragen werden, wird mit Bezug auf Fig. 3 näher erläutert.

Die hier gezeigte Abfrageeinrichtung 20 weist ihrerseits ein Sende-/Empfangsmodul mit einer entsprechenden Antenne 21 auf. In einer vorteilhaften Ausgestaltung der Erfindung ist die Abfrageeinrichtung 20 angepasst, eine der mehreren Sensoreinrichtungen 10, 15 gezielt abzufragen. Die Abfrageeinrichtung 20 kann hierbei ein Triggersignal aussenden, welches von den Sensoreinrichtungen 10, 15 empfangen wird. Vorteilhaft ist hierbei, wenn das Triggersignal eine eindeutige Kennung der abzufragenden Sensoreinrichtung enthält. Die Sensoreinrichtungen 10, 15 empfangen dieses Triggersignal, wobei nur jene Sensoreinrichtung die Übertragung der Messdaten veranlasst, deren Sensorkennung mit der eindeutigen Kennung des Triggersignals übereinstimmt. Die übrigen Sensoreinrichtungen können das empfangene Triggersignal verwerfen. Damit kann eine spezifische Sensoreinrichtung zur Übertragung der detektierten Messgrößen veranlasst werden, wobei die übrigen Sensoreinrichtungen lediglich als Repeater zum Weiterleiten der Datenpakete an die Abfrageeinrichtung 20 verwendet werden.

Mit dem erfindungsgemäßen Sensorsystem, das eine Anzahl von Sensoreinrichtungen 10, 15 aufweist, die dauerhaft im Kanal 30 angeordnet sind, erhält der Anwender jederzeit Informationen über die im Kanal vorherrschenden Umgebungsbedingungen bzw. über den Zustand des Kanals selbst, ohne dabei mobile Inspektionssysteme in den Kanal einbringen zu müssen. Durch die drahtlose Vernetzung der Sensoreinrichtungen 10, 15 können auch Messdaten von jenen Sensoreinrichtungen mit Hilfe einer Abfrageeinrichtung 20 abgefragt werden, zu denen keine direkte drahtlose Kommunikationsverbindung zur Abfrageeinrichtung herstellbar ist.

Gezeigt ist in Fig. 1 auch eine Inspektionseinrichtung 50, die als Fahrwagen bzw. Inspektionswagen ausgestaltet ist. Die Inspektionseinrichtung 50 weist eine Sende-/Empfangseinheit 51 auf, die angepasst ist, die in dem Kanal 30 angeordneten Sensoreinrichtungen 10, 15 abzufragen. Bei dieser Inspektionseinrichtung 50 handelt es sich um eine spezielle Ausgestaltung einer Abfrageeinrichtung 20, die in dem Kanal 30 verfahrbar ist. Die Inspektionseinrichtung 50 kann zusätzliche Sensoren, beispielsweise einen Bildsensor aufweisen. Damit ist es möglich, mit der Inspektionseinrichtung 50 beispielsweise Bildaufnahmen des Kanalinneren zu machen und weitere Messwerte von den in dem Kanal fest verbauten Sensoreinrichtungen 10, 15 entgegenzunehmen. Anstelle des Fahrwagens kann auch ein Schiebesystem vorgesehen sein, das über eine entsprechende Sende-/Empfangseinheit 51 verfügt.

**Fig. 2** zeigt ein Blockschaltbild einer erfindungsgemäßen Sensoreinrichtung 10, 15.

Die Sensoreinrichtung weist ein luft- und fluiddichtes Gehäuse 40 auf, in dem die Komponenten der Sensoreinrichtung angeordnet sind. Das Gehäuse 40 weist vorzugsweise eine Einrichtung auf, mit der das Gehäuse bzw. die Sensoreinrichtung an der Innenwandung eines Kanals befestigt werden kann. Vorzugsweise ist das Gehäuse 40 aus einem stabilen Material gefertigt.

Die Sensoreinrichtung weist vorzugsweise eine Energieversorgungseinheit 41, einen Datenspeicher 42, ein oder mehrere Sensorelemente 43, eine Datenverarbeitungseinrichtung 44 und ein Sende-/Empfangsmodul 45 mit einer Sende-/Empfangsantenne 46 auf. Optional kann die Sensoreinrichtung auch eine Einrichtung 47 zum Bereitstellen der Lokationsdaten der Sensoreinrichtung aufweisen.

Die Energieversorgungseinheit 41 kann als Akkumulator oder Batterie ausgestaltet sein und dient zur Versorgung der übrigen Komponenten 42, 43, 44, 45 mit elektrischer Energie. Alternativ oder zusätzlich zum Akkumulator bzw. zur Batterie kann auch eine Energieerzeugungseinrichtung vorgesehen sein, mit der elektrische Energie aus der Umgebung der Sensoreinrichtung in dem Kanal gewonnen werden kann. Beispielsweise kann eine Einrichtung vorgesehen sein, die aus einer Temperaturdifferenz elektrische Energie gewinnt, oder die aus dem Luftstrom in dem Kanal elektrische Energie gewinnt, wobei die so gewonnene elektrische Energie zur Versorgung der anderen Komponenten verwendet werden kann oder wobei die so gewonnene elektrische Energie in dem Akkumulator gespeichert werden kann.

Der Datenspeicher 42 ist vorgesehen, um einerseits die von den Sensorelementen detektierten Messgrößen zu speichern und andererseits um von einer weiteren Sensoreinrichtung empfangene Messdaten zwischenzuspeichern. Sofern die Sensoreinrichtung nur dazu verwendet werden soll, die detektierten Messgrößen unmittelbar an eine weitere Sensoreinrichtung oder an eine Abfrageeinrichtung zu senden, kann auf den Datenspeicher 42 auch verzichtet werden.

Die Sensorelemente 43 können einen Temperatursensor, einen Durchflusssensor, einen Füllstandssensor, einen Drucksensor, einen Schallsensor, einen Gassensor, einen Sensor zum Erfassen einer Wasserqualität und/oder einer Schadstoffbelastung, einen Bildsensor, und Kombinationen hiervon umfassen. So kann beispielsweise der Durchfluss eines wasserführenden Kanals fortlaufend gemessen werden. Mit Hilfe eines Ultraschallsensors kann beispielsweise ein Verschleiß gemessen werden. Sämtliche der gemessenen Messgrößen können in dem Datenspeicher 42 gespeichert werden und/oder an eine weitere Sensoreinrichtung oder an eine Abfrageeinrichtung 20 übertragen werden. Sofern für die Detektion einer Messgröße erforderlich, können Messfühler des jeweiligen Sensorelements durch die Gehäusewandung hindurch nach außen geführt werden, wobei die hierfür erforderliche Öffnung in der Gehäusewandung hermetisch abgedichtet ist.

Die Sensorelemente 43 können mit einer Datenverarbeitungseinrichtung 44, die als Mikroprozessor, als FPGA (Field Programmable Gate Array) oder als Mikrocontroller ausgestaltet ist, gekoppelt sein. Mit Hilfe der Datenverarbeitungseinrichtung 44 können die detektierten Messgrößen vor dem Speichern in dem Datenspeicher 42 und/oder vor der Übertragung an eine weitere Sensoreinrichtung oder an eine Abfrageeinrichtung 20 aufbereitet werden. Das Aufbereiten der Messwerte kann beispielsweise ein kryptographisches Verschlüsseln der Messwerte oder ein Erzeugen von Datenpaketen umfassen. Beim Erzeugen von Datenpaketen kann jedem Datenpaket eine eindeutige Kennung der Sensoreinrichtung zugeordnet werden.

Beim Aufbereiten der detektierten Messgrößen kann alternativ oder zusätzlich aus mehreren Messwerten auch ein Mittelwert gebildet werden. So kann beispielsweise aus den während eines bestimmten Messintervalls aufgenommenen Temperaturwerten eine Durchschnittstemperatur gebildet werden. Diese Durchschnittstemperatur kann dann als Messwert an eine weitere Sensoreinrichtung oder an die Abfrageeinrichtung übertragen werden. Dadurch kann die zu übertragende Datenmenge erheblich reduziert werden, was einen geringeren Energieverbrauch des Sende-/Empfangsmoduls 45 zur Folge hat.

Die Datenverarbeitungseinrichtung 44 ist mit dem Sende-/Empfangsmodul 45 gekoppelt. Das Sende-/Empfangsmodul 45 ist einerseits vorgesehen, die gegebenenfalls aufbereiteten Messgrößen als Messdaten an eine weitere Sensoreinrichtung oder an eine Abfrageeinrichtung 20 zu übertragen. Andererseits ist das Sende-/Empfangsmodul 45 vorgesehen, Messdaten von anderen Sensoreinrichtungen zu empfangen und gegebenenfalls von einer Abfrageeinrichtung 20 Triggersignale entgegenzunehmen. Die empfangenen Messdaten können dann an eine weitere Sensoreinrichtung oder an eine Abfrageeinrichtung 20 weitergeleitet oder in dem Datenspeicher 42 zwischengespeichert werden.

Ein empfangenes Triggersignal kann der Datenverarbeitungseinrichtung 44 zur Auswertung zugeführt werden. Beispielsweise kann die Datenverarbeitungseinrichtung 44 prüfen, ob das Triggersignal eine eindeutige Kennung enthält, die der Kennung der Sensoreinrichtung entspricht. In diesem Fall kann die Sensoreinrichtung von einem Ruhemodus in einen Aktivmodus wechseln, in dem aktuell detektierte Messgrößen oder in dem Datenspeicher 42 gespeicherte Messgrößen an eine weitere Sensoreinrichtung oder an die Abfrageeinrichtung 20 übertragen werden.

Die Sensoreinrichtung ist in einer Ausgestaltung der Erfindung so angepasst, dass sie im Ruhemodus Messwerte aufzeichnen und ein Triggersignal empfangen kann. Die Sendeeinheit des Sende-/Empfangsmoduls 45 kann im Ruhemodus deaktiviert sein. Damit ist gewährleistet, dass im Ruhemodus weiterhin Messwerte aufgezeichnet werden und dass die Sensoreinrichtung mit einem externen Signal (Triggersignal) "aufgeweckt" werden kann.

Die Sende-/Empfangsantenne 46 ist in die Gehäusewandung des Gehäuses 40 integriert. In einer Ausgestaltung können großflächige Abschnitte der Gehäusewandung 40 als Antenne ausgestaltet sein, um in mehrere Richtungen eine optimale Sende- bzw. Empfangsqualität zu gewährleisten.

In einer Ausgestaltung können auch mehrere Antennen 46 vorgesehen sein. Bei Kenntnis der Lage der benachbarten Sensoreinrichtung relativ zur sendenden Sensoreinrichtung kann so die der benachbarten Sensoreinrichtung zugewandte Antenne 46 aktiviert werden, sodass die volle Sendeleistung auf diese aktivierte Antenne 46 gegeben werden kann. Die übrigen Antennen können dabei deaktiviert sein.

Werden mehrere erfindungsgemäße Sensoreinrichtungen beabstandet zueinander und entlang der Längsachse des Kanals 30 angeordnet (wie in Fig. 1 gezeigt), kann jede der Sensoreinrichtungen eine nach vorn ausgerichtete und eine nach hinten ausgerichtete Antenne aufweisen, wobei jeweils nur jene Sendeantenne aktiviert werden muss, die zur empfangenden Sensoreinrichtung hin ausgerichtet ist.

Durch das Vorsehen eines Ruhe- bzw. Aktivmodus und/oder die gezielte Aktivierung einer Sendeantenne aus mehreren Sendeantennen sowie das Weiterleiten von empfangenen Messdaten und die Aktivierung ausgewählter Sensoreinrichtungen mit Hilfe eines Triggersignals wird ein intelligentes und gleichzeitig stromsparendes Netzwerk von Sensoreinrichtungen bereitgestellt, mit dem ein Abschnitt eines Kanals dauerhaft überwacht werden kann, wobei die Messwerte bei Bedarf von einer außerhalb des Kanals angeordneten Abfrageeinrichtung 20 abgefragt werden können.

Die Einrichtung 47 zum Bereitstellen der Lokationsdaten der Sensoreinrichtung beispielsweise kann als GPS-Modul ausgestaltet sein. Alternativ kann die Einrichtung 47 zum Bereitstellen der Lokationsdaten der Sensoreinrichtung auch so ausgestaltet sein, dass sie anhand von Signallaufzeiten eines Signals zwischen der Sensoreinrichtung und einer Referenzeinrichtung die Position der Sensoreinrichtung in dem Kanal ermitteln kann, wobei die Referenzeinrichtung entweder im Kanal oder außerhalb des Kanals angeordnet sein kann. Alternativ kann die Einrichtung 47 zum Bereitstellen der Lokationsdaten der Sensoreinrichtung auch als Speichereinrichtung ausgestaltet sein, in der die Lokationsdaten der Sensoreinrichtung gespeichert sind.

Die Lokationsdaten geben die geographische Lokation der Sensoreinrichtung in dem Kanal an und können zusammen mit den Messdaten übertragen werden. Damit können die Messdaten einer Lokation in dem Kanal zugeordnet werden.

**Fig. 3** zeigt drei verschiedene Ausgestaltungen eines Datenpakets 60 zum Übertragen von Messdaten von einer Sensoreinrichtung an eine weitere Sensoreinrichtung oder an eine Abfrageeinrichtung 20.

Ein erstes Beispiel eines Datenpaketes 60 ist in Abbildung (a) gezeigt. In dem Header des Datenpaketes 60 sind eine eindeutige Kennung 61 der Sensoreinrichtung, eine eindeutige Kennung 62 des Sensorelements der Sensoreinrichtung, eine Kennung 63 des Datenpakets und eine Information 64 über die Länge der Nutzdaten (Payload) gespeichert. Die Kennung 63 des Datenpakets kann beispielsweise eine fortlaufende Nummer oder ein Zeitstempel sein, die es der Abfrageeinrichtung 20 ermöglicht, die empfangenen Datenpakete in die richtige Reihenfolge zu bringen, sollten die Datenpakete über unterschiedliche Routen von der Sensoreinrichtung zu der Abfrageeinrichtung 20 gelangen. Die eindeutige Kennung 61 der Sensoreinrichtung ist vorgesehen, um der Abfrageeinrichtung 20 die Zuordnung des Datenpakets zu einer Sensoreinrichtung zu ermöglichen. Sofern eine Sensoreinrichtung mehrere unterschiedliche Sensorelemente aufweist, kann die eindeutige Kennung 62 die Zuordnung des Datenpakets zu einem Sensorelement innerhalb einer Sensoreinrichtung gewährleisten. Sofern eine Sensoreinrichtung nur ein Sensorelement aufweist, kann auf die eindeutige Kennung 62 verzichtet werden. Sofern die Datenpakete 60 in der Reihenfolge empfangen werden, in der sie gesendet werden, kann auf die Kennung 63 ebenfalls verzichtet werden.

In dem dem Header folgenden Payload bzw. Nutzdaten werden die entsprechenden Messgrößen gespeichert, wobei auch mehrere Messgrößen eines Sensorelements in den Nutzdaten gespeichert sein können.

Abbildung (b) zeigt eine alternative Ausgestaltung eines Datenpakets 60. Der Header enthält hier die eindeutige Kennung 61 der Sensoreinrichtung, eine eindeutige Kennung 62 des Sensorelements und eine Information 64 über die Länge der Nutzdaten. In den Nutzdaten selbst sind mehrere Datensegmente DS1 bis DSn gespeichert, wobei jedes Datensegment eine Kennung 63 und dazugehörige Daten 65 enthält. Die Kennung 63 eines Datensegments kann beispielsweise eine fortlaufende Nummer oder ein Zeitstempel sein. Damit können die einzelnen Datensegmente mehrerer eines Sensorelements einer Sensoreinrichtung zugeordnete Datenpakete 60 bei der Abfrageeinrichtung 20 in die richtige Reihenfolge gebracht werden.

Die Abbildung (c) zeigt eine weitere alternative Ausgestaltung eines Datenpakets 60. Der Header enthält hier eine eindeutige Kennung 61 der Sensoreinrichtung und eine Information 64 über die Länge der Nutzdaten. Die Nutzdaten selbst enthalten eine Anzahl von Datensegmenten DS1 bis DSn, wobei jedes Datensegment eine eindeutige Kennung 62 eines Sensorelements, eine Kennung 63 des Datensegments und die zugehörigen Daten 65 enthält. Mit Hilfe des in Abbildung (c) gezeigten Datenpakets 60 können Messwerte unterschiedlicher Sensorelemente einer Sensoreinrichtung mit einem einzelnen Datenpaket 60 übertragen werden. Mit Hilfe der eindeutigen Kennung 62 kann die Abfrageeinrichtung 20 jedes Datensegment einem Sensorelement eindeutig zuordnen, wobei die einzelnen Datensegmente mit Hilfe der Kennung 63, die eine fortlaufende Nummer oder ein Zeitstempel sein kann, in die richtige Reihenfolge gebracht werden können.

Das Erzeugen der Datenpakete 60 wird in einer Ausgestaltung der Erfindung von der Datenverarbeitungseinrichtung 44 vorgenommen, sodass das Sende-/Empfangsmodul 45 die erzeugten Datenpakete 60 ohne weitere Verarbeitung senden kann.

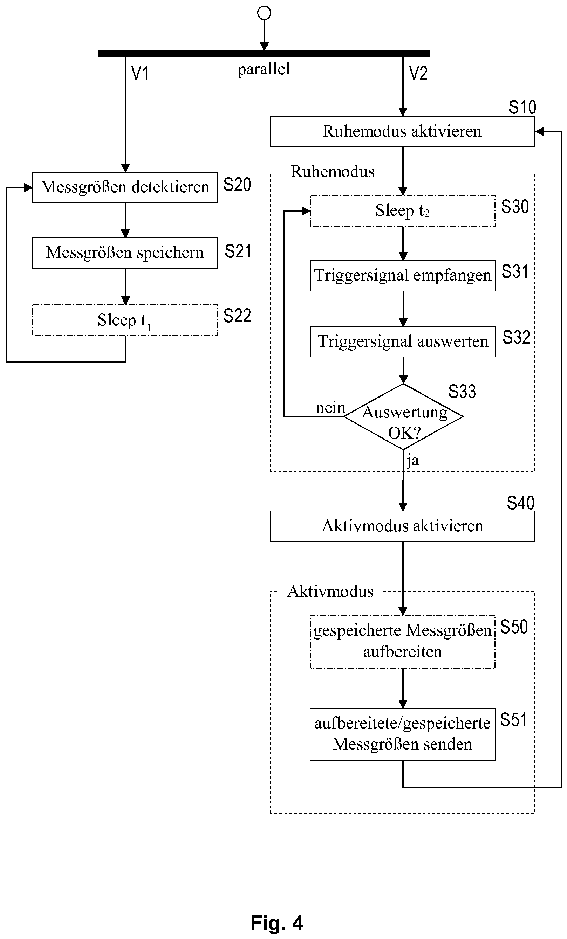

**Fig. 4** zeigt ein erfindungsgemäßes Verfahren zum Erfassen von Messgrößen in einem Kanal.

Das Verfahren gliedert sich bei der in Fig. 4 gezeigten Ausgestaltung in zwei Abschnitte V1 und V2, die parallel ausgeführt werden können.

Der erste Abschnitt V1 des Verfahrens umfasst im Wesentlichen drei Schritte, wobei in einem ersten Schritt S20 von den Sensorelementen Messgrößen detektiert werden, die in dem nachfolgenden Schritt S21 in dem Datenspeicher gespeichert werden. Vor dem Speichern der Messgrößen in dem Datenspeicher können diese gegebenenfalls verarbeitet und/oder aufbereitet werden. In dem nachfolgenden Schritt S22 wird der Abschnitt V1 für eine vorbestimmte Zeit t1 angehalten bzw. in einen Ruhemodus versetzt, in dem weder Messgrößen detektiert noch gespeichert werden. Nach Ablauf der Zeit t1 kehrt der Abschnitt V1 des Verfahrens zu dem Verfahrensschritt S20 zurück.

Der Zeitraum t1, für den der Verfahrensabschnitt V1 in einen Ruhemodus versetzt wird, kann beliebig gewählt werden. Ändern sich Messgrößen erfahrungsgemäß nur sehr selten oder nur sehr langsam, kann ein verhältnismäßig großer Zeitraum t1 gewählt werden. Beispielsweise kann ein Zeitraum t1 von einer Stunde gewählt werden, sodass Messgrößen stündlich detektiert und gespeichert werden. Der Energiebedarf für das Aufzeichnen von Messgrößen kann so erheblich reduziert werden und an die zu erwartende Häufigkeit der Änderung der Messgrößen angepasst werden. Gleichzeitig wird damit gewährleistet, dass ausreichend viele Messwerte aufgezeichnet werden.

In dem Verfahrensabschnitt V2 wird zunächst in dem Schritt S10 ein Ruhemodus der Sensoreinrichtung aktiviert.

In dem Ruhemodus werden die Empfangseinheit und die Sendeeinheit des Sende-/Empfangsmoduls deaktiviert. Die Empfangseinheit wird für einen vorbestimmten Zeitraum t2 deaktiviert (Schritt S30). Nach Ablauf des Zeitraums t2 wird die Empfangseinheit des Sende-/Empfangsmoduls aktiviert, um in dem Schritt S31 ein Triggersignal empfangen zu können. Das in dem Schritt S31 empfangene Triggersignal, welches von der Abfrageeinrichtung 20 gesendet wird, wird in den nachfolgenden Schritten S32 und S33 ausgewertet. Beim Auswerten des Triggersignals wird überprüft, ob die in dem Triggersignal enthaltene eindeutige Kennung der Kennung der Sensoreinrichtung entspricht.

Entspricht die mit dem Triggersignal empfangene eindeutige Kennung der Kennung der Sensoreinrichtung, wird der Verfahrensabschnitt V2 mit dem Schritt S40 fortgesetzt. Anderenfalls kehrt der Verfahrensabschnitt V2 zu dem Schritt S30 zurück, um die Empfangseinheit des Sende-/Empfangsmoduls wiederum für den vorbestimmten Zeitraum t2 zu deaktivieren.

In dem Schritt S40 wird die Sensoreinrichtung in einen Aktivmodus gebracht. Hierbei wird die Sendeeinheit des Sende-/Empfangsmoduls aktiviert, um Messdaten an eine weitere Sensoreinrichtung oder an eine Abfrageeinrichtung 20 übertragen zu können.

In dem Aktivmodus werden in dem Schritt S50 die gespeicherten Messgrößen aufbereitet. Der Schritt S50 kann optional ausgeführt werden.

In dem nachfolgenden Schritt S51 werden die gegebenenfalls aufbereiteten und gespeicherten Messgrößen an eine weitere Sensoreinrichtung oder an die Abfrageeinrichtung 20 übertragen. Anschließend kehrt der Verfahrensabschnitt V2 zu dem Schritt S10 zurück, in dem Sensoreinrichtung wieder in einen Ruhemodus gebracht wird.

Mit den hier gezeigten Schritten des Verfahrensabschnittes V2 ist gewährleistet, dass die Sensoreinrichtung in regelmäßigen Abständen ein Triggersignal empfangen kann, wobei die Sensoreinrichtung nur dann in den Aktivmodus zum Senden der Messdaten gebracht wird, wenn mit dem Triggersignal entsprechende Informationen (zum Beispiel Kennung der Sensoreinrichtung) empfangen werden. Zwischen dem Senden der Messdaten befindet sich die Sensoreinrichtung damit in einem Betriebsmodus, in dem der Energieverbrauch erheblich reduziert wird, wobei dennoch gewährleistet ist, dass die Sensoreinrichtung mit Hilfe eines Triggersignals "aufgeweckt" werden kann.

Der Zeitraum t2, für den die Empfangseinheit des Sende-/Empfangsmoduls deaktiviert wird, ist vorzugsweise kleiner als ein Zeitraum, für den die Abfrageeinrichtung 20 ein Triggersignal sendet, sofern die Abfrageeinrichtung 20 das Triggersignal in regelmäßigen Abständen sendet. Hierbei ist zudem vorteilhaft, wenn die Zeitintervalle, in denen die Abfrageeinrichtung kein Triggersignal sendet, kleiner oder gleich dem Intervall t2 ist. Damit ist gewährleistet, dass für die Dauer, in der das Triggersignal gesendet wird, die Empfangseinheit des Sende-/Empfangsmoduls der entsprechenden Sensoreinrichtung mindestens einmal aktiviert ist.

Alternativ kann das Triggersignal auch fortwährend, das heißt ohne Unterbrechung gesendet werden. In einer weiteren Alternative kann auf den Schritt S30 verzichtet werden, sodass unabhängig von der Dauer des Triggersignals dieses von der Sensoreinrichtung in jedem Fall empfangen wird.

In einer alternativen Ausgestaltung des erfindungsgemäßen Verfahrens kann auf die parallele Ausführung der Verfahrensabschnitte V1 und V2 auch verzichtet werden. Hierbei ist es dann vorgesehen, die Verfahrensschritte S20 und S21 nach einer erfolgreichen Auswertung in dem Schritt S33 auszuführen. Damit wird eine Ad-hoc-Abfrage von aktuellen Messgrößen ermöglicht, wobei die Messwerte genau dann detektiert werden, wenn die Sensoreinrichtung mit Hilfe des Triggersignals erfolgreich aktiviert wird.

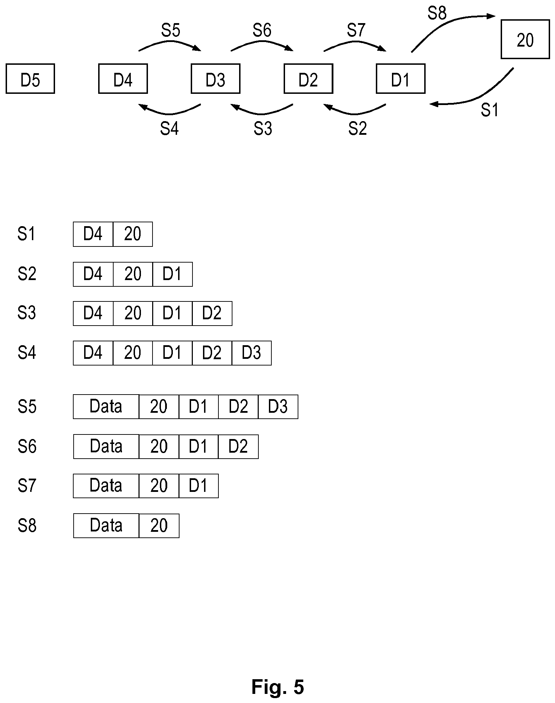

**Fig. 5** zeigt ein mögliches Beispiel eines erfindungsgemäßen Verfahrens, bei dem die Messdaten bzw. die Datenpakete gemäß einer vorbestimmten Route von einer Sensoreinrichtung an eine Abfrageeinrichtung 20 übertragen werden.

Gezeigt sind hier fünf Sensoreinrichtungen D1 bis D5 und die Abfrageeinrichtung 20.

Mit Hilfe der Abfrageeinrichtung 20 sollen die von der Sensoreinrichtung D4 aufgezeichneten Messgrößen abgefragt werden.

Die Abfrageeinrichtung 20 erzeugt hierzu ein Datenpaket, das in einem ersten Feld die Kennung D4 der abzufragenden Sensoreinrichtung und in einem zweiten Feld die Kennung der Abfrageeinrichtung 20 enthält. Die Kennung der Abfrageeinrichtung 20 bildet damit die Adresse, an die die Messdaten gesendet werden sollen (Antwortadresse). Dieses Datenpaket wird nun in dem ersten Schritt S1 gesendet und von der ersten Sensoreinrichtung D1 empfangen.

Die Sensoreinrichtung D1 überprüft anhand des ersten Feldes des Datenpaketes, ob dieses für sie bestimmt ist. Die Sensoreinrichtung D1 erkennt, dass das Datenpaket nicht für sie bestimmt ist und ergänzt das Datenpaket um ein weiteres Feld, in dem die Kennung D1 der ersten Sensoreinrichtung gespeichert wird. Dieses erweiterte Datenpaket wird dann in dem Schritt S2 von der ersten Sensoreinrichtung D1 an die zweite Sensoreinrichtung D2 übertragen.

Die zweite Sensoreinrichtung D2 überprüft nun ebenfalls, ob dieses Datenpaket für sie bestimmt ist. Weil das Datenpaket nicht für die zweite Sensoreinrichtung D2 bestimmt ist, ergänzt die zweite Sensoreinrichtung das Datenpaket um ein weiteres Feld, in dem die Kennung D2 der zweiten Sensoreinrichtung gespeichert wird. In dem Schritt S3 wird dieses von der zweiten Sensoreinrichtung erweiterte Datenpaket an die dritte Sensoreinrichtung D3 übertragen.

Die Sensoreinrichtung D3 überprüft nun ihrerseits, ob das Datenpaket für sie bestimmt ist. Auch diese Überprüfung ist negativ, sodass die dritte Sensoreinrichtung D3 dem Datenpaket ein weiteres Feld hinzufügt, in dem die Kennung D3 der dritten Sensoreinrichtung gespeichert wird. In dem Schritt S4 sendet die dritte Sensoreinrichtung das so erweiterte Datenpaket an die vierte Sensoreinrichtung D4.

Damit enthält das von der Sensoreinrichtung D4 empfangene Datenpaket nunmehr fünf Felder, nämlich die eindeutige Kennung der angefragten Sensoreinrichtung, die eindeutige Kennung der Abfrageeinrichtung und die eindeutigen Kennungen der Sensoreinrichtungen, die das Datenpaket jeweils erweitert und weitergeleitet haben. Die drei eindeutigen Kennungen der Sensoreinrichtungen in dem Datenpaket, die das Datenpaket erweitert und weitergeleitet haben, entsprechen hierbei der Route, der das Datenpaket gefolgt ist. Diese Route kann nunmehr von der angefragten Sensoreinrichtung D4 genutzt werden, um die Messdaten auf demselben Weg zur Abfrageeinrichtung 20 zu senden.

Die Sensoreinrichtung D4 erkennt nun, dass das empfangene Datenpaket für sie bestimmt ist. Die Sensoreinrichtung D4 ersetzt nun das erste Feld in dem Datenpaket durch die Messdaten. Die Messdaten können hierbei so strukturiert sein, wie mit Bezug auf Fig. 3 erläutert.

Die Sensoreinrichtung D4 versendet nun in dem Schritt S5 das Datenpaket. Dieses Datenpaket wird von der Sensoreinrichtung D3 empfangen. Die Sensoreinrichtung D3 überprüft, ob das letzte Feld des Datenpakets die Kennung der Sensoreinrichtung D3 enthält. In dem in Fig. 5 gezeigten Beispiel ist diese Überprüfung positiv, sodass die dritte Sensoreinrichtung D3 das letzte Feld des Datenpakets entfernt und das restliche Datenpaket wiederum versendet. Dieser Vorgang wird fortgesetzt, bis das Datenpaket die Abfrageeinrichtung 20 erreicht hat, wobei jede weitere Sensoreinrichtung D2, D1 das jeweils letzte Feld in dem Datenpaket entfernt und das jeweils restliche Datenpaket weiterleitet (Schritte S6, S7, S8).

Die Abfrageeinrichtung 20 überprüft schließlich, ob in dem letzten Feld des Datenpakets die Kennung der Abfrageeinrichtung gespeichert ist. Ist dies der Fall, ist das Datenpaket für die Abfrageeinrichtung 20 bestimmt. Die Abfrageeinrichtung 20 kann nun das letzte Feld in dem Datenpaket entfernen und die in dem Datenpaket enthaltenen Messdaten einer weiteren Verarbeitung zuführen.

Das in Fig. 5 gezeigte Verfahren ist dann vorteilhaft, wenn mehrere Abfrageeinrichtungen unterschiedliche Sensoreinrichtungen abfragen können. Durch dieses Verfahren ist gewährleistet, dass die von einer Abfrageeinrichtung angefragten Sensordaten auch zur jeweiligen Abfrageeinrichtung gelangen. Zudem ist gewährleistet, dass nur jene Sensoreinrichtungen die Sendeeinheit des Sende-/Empfangsmoduls aktivieren müssen, die ein Bestandteil der Übertragungsroute sind. Der Energieverbrauch des Sensorsystems als Ganzes kann so reduziert werden. So zeigt Fig. 5 eine fünfte Sensoreinrichtung D5, die sich in Reichweite der vierten Sensoreinrichtung D4 befindet. Die fünfte Sensoreinrichtung D5 könnte demnach das von der vierten Sensoreinrichtung D4 gesendete Datenpaket ebenfalls empfangen und an eine weitere Sensoreinrichtung weiterleiten. Weil die fünfte Sensoreinrichtung D5 nicht Bestandteil der Route ist, kann die fünfte Sensoreinrichtung D5 das empfangene Datenpaket verwerfen und die Sendeeinheit der Sensoreinrichtung D5 muss nicht aktiviert werden.

In einer alternativen Ausgestaltung können auch statische Routen vorgesehen werden. Dabei kann eine Sensoreinrichtung empfangene Datenpakete nur an eine bestimmte weitere Sensoreinrichtung übertragen. Die empfangende Sensoreinrichtung muss dabei lediglich eine Kennung der sendenden Sensoreinrichtung überprüfen. Das Ergänzen des Datenpakets um Kennungen der weiterleitenden Sensoreinrichtungen ist dabei nicht notwendig.

Dennoch ist das in Fig. 5 gezeigte Verfahren vorteilhaft, weil damit dynamische Routen möglich sind, sodass beispielsweise bei einem Ausfall einer Sensoreinrichtung eine alternative Route eingerichtet werden kann.

### Bezugszeichen:

- 10: erste Sensoreinrichtungen (Slave)
- 15: zweite Sensoreinrichtungen (Master)
- 20: Abfrageeinrichtung
- 21: Antennensystem (inkl. Sende-/Empfangsmodul) der Abfrageeinrichtung 20
- 30: Kanal/Rohr
- 35: Schacht
- 40: Gehäuse (vorzugsweise wasser- und luftdicht)
- 41: Energieversorgungseinheit (z.B. Akkumulator oder Batterie bzw. mit Akkumulator gekoppelte Energieerzeugungseinrichtung - Energy Harvesting)
- 42: Datenspeicher
- 43: ein (oder mehrere) Sensorelement(e)
- 44: Datenverarbeitungseinrichtung (Mikroprozessor, µC, oder FPGA)
- 45: Sende-/Empfangsmodul (z.B. Funkmodul)
- 46: Sende-/Empfangsantenne des Sende-/Empfangsmoduls 45
- 47: Einrichtung zum Bereitstellen der Lokationsdaten der Sensoreinrichtung
- 50: Inspektionseinrichtung (als Fahrwagen oder Schiebesystem)
- 51: Sende-/Empfangseinheit der Inspektionseinrichtung 50
- 60: Datenpaket
- 61: ID (eindeutige Kennung) der Sensoreinrichtung
- 62: ID (eindeutige Kennung) des Sensors
- 63: Kennung des Datenpaketes (z.B. fortlaufende Nummer oder Timestamp)
- 64: Länge des Payload
- 65: Daten
- D1 - D5: Sensoreinrichtungen
- DS1 - DSn: Datensegmente des Payload
- S1 - S8: Übertragungsschritte
- S10 - S51: Verfahrensschritte
- t₁, t₂: Dauer des Ruhemodus
- V1, V2: parallel ausgeführte Abschnitte des erfindungsgemäßen Verfahrens

## Patentansprüche

1. Sensoreinrichtung (10;15) zum Erfassen von Messgrößen in einem Kanal (30), wobei die Sensoreinrichtung angepasst ist, dauerhaft im Kanal zu verbleiben, wobei die Sensoreinrichtung zumindest aufweist:
- zumindest ein Sensorelement (43) zum Detektieren von zumindest einer Messgröße;
- eine mit dem zumindest einen Sensorelement gekoppelte Datenverarbeitungseinrichtung (44) zum Verarbeiten und/oder Aufbereiten der von dem zumindest einen Sensorelement detektierten Messgrößen;
- ein mit der Datenverarbeitungseinrichtung gekoppeltes Sendemodul (45) mit einer Antenne (46) zum drahtlosen Übertragen der verarbeiteten und/oder aufbereiteten Messgrößen als Messdaten an eine zweite Sensoreinrichtung und/oder an eine Abfrageeinrichtung (20);
- eine Energieversorgungseinheit (41) zum Versorgen des zumindest einen Sensorelements, der Datenverarbeitungseinrichtung und des Sendemoduls mit elektrischer Energie;
wobei
die Sensoreinrichtung ein Gehäuse (40) aufweist, das das zumindest eine Sensorelement, die Datenverarbeitungseinrichtung, das Sendemodul und die Energieversorgungseinheit aufnimmt, wobei das Gehäuse fluid- und luftdicht ausgestaltet ist,
**dadurch gekennzeichnet, dass**
das Gehäuse angepasst ist, in dem Kanal an der Kanalinnenwandung befestigt zu werden.

2. Sensoreinrichtung nach dem vorhergehenden Anspruch, wobei das zumindest eine Sensorelement (43) ausgewählt ist aus der Gruppe umfassend Temperatursensor, Durchflusssensor, Füllstandsensor, Drucksensor, Schallsensor, Gassensor, Sensor zum Erfassen einer Wasserqualität und/oder einer Schadstoffbelastung, Bildsensor, und Kombinationen hiervon, und/oder wobei die Datenverarbeitungseinrichtung (44) als Mikrocontroller, als Mikroprozessor oder als FPGA (Field Programmable Gate Array) ausgestaltet ist.

3. Sensoreinrichtung nach einem der vorhergehenden Ansprüche, wobei die Energieversorgungseinheit (41) eine Batterie oder einen Akkumulator umfasst.

4. Sensoreinrichtung nach einem der vorhergehenden Ansprüche, wobei die Energieversorgungseinheit (41) eine Einrichtung zur Gewinnung von elektrischer Energie aus der Umgebung der Sensoreinrichtung aufweist, insbesondere aus der Umgebungstemperatur und/oder aus dem Luftstrom in dem Kanal, wobei die Einrichtung zur Gewinnung von elektrischer Energie mit dem Akkumulator gekoppelt ist, um den Akkumulator aufzuladen.

5. Sensoreinrichtung nach einem der vorhergehenden Ansprüche, wobei die Sensoreinrichtung ein Empfangsmodul mit einer Antenne aufweist zum drahtlosen Empfangen von Messdaten von einer dritten Sensoreinrichtung, wobei das Empfangsmodul und das Sendemodul vorzugsweise als eine ein Sende-/Empfangsmodul mit einer Antenne ausgebildete Einheit ausgestaltet sind, und wobei die Sensoreinrichtung angepasst ist, die empfangenen Messdaten in einem Datenspeicher (42) der Sensoreinrichtung zu speichern und/oder an die zweite Sensoreinrichtung und/oder an die Abfrageeinrichtung (20) zu übertragen.

6. Sensoreinrichtung nach einem der vorhergehenden Ansprüche, wobei die Datenverarbeitungseinrichtung (44) und das Sendemodul (45) angepasst sind, die Messdaten als zumindest ein Datenpaket (60) zu übertragen, wobei das Datenpaket einen Header und einen Payload aufweist, wobei in dem Header zumindest eine eindeutige Kennung (61) der Sensoreinrichtung und in dem Payload zumindest die Messdaten enthalten sind.

7. Sensoreinrichtung nach einem der vorhergehenden Ansprüche, wobei die Sensoreinrichtung angepasst ist, vorzugsweise zyklisch zwischen einem Ruhemodus und einem Aktivmodus zu wechseln, und/oder wobei die Sensoreinrichtung angepasst ist, nach Empfang eines Triggersignals von dem Ruhemodus in den Aktivmodus zu wechseln, wobei das Triggersignal vorzugsweise eine Kennung der zu aktivierenden Sensoreinrichtung aufweist.

8. Sensoreinrichtung nach einem der vorhergehenden Ansprüche, wobei dieser eine Sensorkennung zugeordnet ist und wobei die Sensoreinrichtung angepasst ist, ein empfangenes Triggersignal weiterzuleiten, wenn die Kennung der zu aktivierenden Sensoreinrichtung nicht der Sensorkennung entspricht und wobei die Sensoreinrichtung weiter angepasst ist, ein empfangenes Datenpaket (60) gemäß einer vorbestimmten Route weiterzuleiten, und/oder wobei die Sensoreinrichtung angepasst ist, nach dem Empfang eines Triggersignals für eine vorbestimmte Zeit in dem Aktivmodus zu bleiben.

9. Sensoreinrichtung nach einem der vorhergehenden Ansprüche, wobei diese eine Einrichtung zum Bereitstellen von Lokationsdaten, die die geographische Lokation der Sensoreinrichtung umfassen, aufweist, wobei die Lokationsdaten zusammen mit den Messdaten an die zweite Sensoreinrichtung und/oder an eine Abfrageeinrichtung (20) übertragen werden oder wobei die Messdaten die Lokationsdaten umfassen.

10. Sensorsystem zum Erfassen von Messgrößen in einem Kanal (30), aufweisend eine Anzahl von Sensoreinrichtungen (10;15) nach einem der vorhergehenden Ansprüche, wobei die Sensoreinrichtungen in vorbestimmten Abständen ortsfest und dauerhaft im Kanal anordenbar sind, wobei der Abstand zwischen jeweils zwei Sensoreinrichtungen so gewählt ist, dass zwischen ihnen eine drahtlose Kommunikationsverbindung zum Übertragen der Messgrößen eingerichtet werden kann.

11. Sensorsystem nach dem vorhergehenden Anspruch, wobei zumindest eine Sensoreinrichtung der Anzahl von Sensoreinrichtungen als Master-Sensoreinrichtung (15) und die übrigen Sensoreinrichtungen der Anzahl von Sensoreinrichtungen als Slave-Sensoreinrichtungen (10) ausgebildet sind, wobei die Slave-Sensoreinrichtungen (10) angepasst sind, detektierte Messgrößen an die Master-Sensoreinrichtungen (15) zu übertragen und wobei die Master-Sensoreinrichtungen (15) angepasst ist, die empfangenen Messgrößen zu speichern und/oder an eine Abfrageeinrichtung (20) des Sensorsystems zu übertragen.

12. Verfahren zum Erfassen von Messgrößen in einem Kanal (30), wobei in dem Kanal zumindest eine erste Sensoreinrichtung (10) und eine zweite Sensoreinrichtung (15) nach einem der Ansprüche 1 bis 9 beabstandet zueinander und ortsfest und dauerhaft angeordnet werden, wobei zumindest die erste Sensoreinrichtung (10) Messgrößen detektiert und die detektierten Messgrößen als Messdaten drahtlos an die zweite Sensoreinrichtung (15) und/oder an eine Abfrageeinrichtung (20) übertragt, und wobei die Sensoreinrichtungen an der Innenwandung des Kanals angeordnet sind.

13. Verfahren nach dem vorhergehenden Anspruch, wobei die Abfrageeinrichtung (20) ein Triggersignal aussendet, welches von der ersten und/oder von der zweiten Sensoreinrichtung empfangen wird, wobei nach dem Empfangen des Triggersignals die jeweilige Sensoreinrichtung (10;15), vorzugsweise in Abhängigkeit von den mit dem Triggersignal übertragenen Informationen, die Messdaten überträgt.

14. Verfahren nach dem vorhergehenden Anspruch, wobei die Sensoreinrichtungen (10;15) nach dem Empfangen des Triggersignals von einem Ruhemodus in einen Aktivmodus, in dem die Messdaten übertragen werden, wechseln und nach dem Übertragen der Messdaten in den Ruhemodus wechseln, wobei die Sensoreinrichtungen (10;15) im Ruhemodus Messgrößen detektieren und in einem Datenspeicher der jeweiligen Sensoreinrichtung mindestens solange Zwischenspeichern, bis die Sensoreinrichtungen in den Aktivmodus wechseln.

15. Verwendung einer Anzahl von Sensoreinrichtungen (10;15) zum Erfassen von Messgrößen in einem Kanal (30) gemäß dem Verfahren nach einem der Ansprüche 12 bis 14,
wobei jede der Sensoreinrichtungen zumindest aufweist:
- zumindest ein Sensorelement (43) zum Detektieren von zumindest einer Messgröße;
- eine mit dem zumindest einen Sensorelement gekoppelte Datenverarbeitungseinrichtung (44) zum Verarbeiten und/oder Aufbereiten der von dem zumindest einen Sensorelement detektierten Messgrößen;
- ein mit der Datenverarbeitungseinrichtung gekoppeltes Sendemodul (45) mit einer Antenne (46) zum drahtlosen Übertragen der verarbeiteten und/oder aufbereiteten Messgrößen als Messdaten an eine zweite Sensoreinrichtung und/oder an eine Abfrageeinrichtung (20);
- eine Energieversorgungseinheit (41) zum Versorgen des zumindest einen Sensorelements, der Datenverarbeitungseinrichtung und des Sendemoduls mit elektrischer Energie; und
- ein Gehäuse (40), das das zumindest eine Sensorelement, die Datenverarbeitungseinrichtung, das Sendemodul und die Energieversorgungseinheit aufnimmt, wobei das Gehäuse fluid- und luftdicht ausgestaltet ist und wobei das Gehäuse angepasst ist, in dem Kanal an der Kanalinnenwandung befestigt zu werden,
und wobei die erfassten Messgrößen als Messdaten an eine außerhalb des Kanals angeordnete Abfrageeinrichtung (20) übertragen werden, wobei die Messdaten vorzugsweise Lokationsdaten umfassen, die die geographische Lokation der jeweiligen Sensoreinrichtung angeben.

## Claims

1. Sensor device (10; 15) for acquiring measured variables in a channel (30), the sensor device being adapted to remain permanently in the channel, the sensor device at least comprising:
- at least one sensor element (43) for detecting at least one measured variable;
- a data processing device (44) coupled to the at least one sensor element for processing and/or preparing the measured variables detected by the at least one sensor element;
- a transmission module (45) coupled to the data processing device and having an antenna (46) for wireless transmission of the processed and/or prepared measured variables as measurement data to a second sensor device and/or to an interrogation device (20);
- a power supply unit (41) for supplying the at least one sensor element, the data processing device and the transmission module with electrical energy;
the sensor device having a housing (40) which receives the at least one sensor element, the data processing device, the transmission module and the energy supply unit, the housing being designed to be fluid- and airtight, **characterized in that** the housing is adapted to be attached in the channel on the inner channel wall.

2. Sensor device according to the preceding claim, wherein the at least one sensor element (43) is selected from the group comprising a temperature sensor, a flow sensor, a level sensor, a pressure sensor, a sound sensor, a gas sensor, a sensor for acquiring a water quality and/or a pollutant load, an image sensor, and combinations thereof, and/or wherein the data processing device (44) is designed as a microcontroller, as a microprocessor or as an FPGA (Field Programmable Gate Array).

3. Sensor device according to one of the preceding claims, wherein the energy supply unit (41) comprises a battery or an accumulator.

4. Sensor device according to one of the preceding claims, wherein the energy supply unit (41) has a device for the production of electrical energy from the surroundings of the sensor device, in particular from the ambient temperature and/or from the air flow in the channel, wherein the device for the production of electrical energy is coupled to the accumulator to charge the accumulator.

5. Sensor device according to one of the preceding claims, wherein the sensor device has a receiving module with an antenna for wireless reception of measurement data from a third sensor device, wherein the receiving module and the transmission module are preferably designed as a unit designed as a transmission/receiving module with an antenna, and wherein the sensor device is adapted to store the received measurement data in a data memory (42) of the sensor device and/or to transmit said measurement data to the second sensor device and/or to the interrogation device (20).

6. Sensor device according to one of the preceding claims, wherein the data processing device (44) and the transmission module (45) are adapted to transmit the measurement data as at least one data packet (60), wherein the data packet has a header and a payload, wherein in the header contains at least one unique identifier (61) of the sensor device and at least the measurement data are contained in the payload.

7. Sensor device according to one of the preceding claims, wherein the sensor device is adapted to preferably switch cyclically between a sleep mode and an active mode, and/or wherein the sensor device is adapted to switch from the sleep mode to the active mode after receipt of a trigger signal, wherein the trigger signal preferably has an identifier of the sensor device to be activated.

8. Sensor device according to one of the preceding claims, wherein said device is assigned a sensor identifier and wherein the sensor device is adapted to forward a received trigger signal if the identifier of the sensor device to be activated does not correspond to the sensor identifier and wherein the sensor device is further adapted to forward a received data packet (60) according to a predetermined route, and/or wherein the sensor device is adapted to remain in the active mode for a predetermined time after receipt of a trigger signal.

9. Sensor device according to one of the preceding claims, wherein said device has a device for providing location data comprising the geographical location of the sensor device, wherien the location data is transmitted together with the measurement data to the second sensor device and/or to an interrogation device (20) or wherein the measurement data comprises the location data.

10. Sensor system for acquiring measured variables in a channel (30), comprising a number of sensor devices (10; 15) according to one of the preceding claims, wherein the sensor devices can be arranged in a stationary and permanent manner in the channel at predetermined intervals, wherein the distance between two sensor devices in each case is selected so that a wireless communication link can be set up between them for transmitting the measured variables.

11. Sensor system according to the preceding claim, wherein at least one sensor device of the number of sensor devices is designed as a master sensor device (15) and the remaining sensor devices of the number of sensor devices are designed as slave sensor devices (10), wherein the slave sensor devices (10) are adapted to transmit detected measured variables to the master sensor devices (15), and wherein the master sensor devices (15) are adapted to store the received measured variables and/or to transmit said measured variables to an interrogation device (20) of the sensor system.

12. Method for acquiring measured variables in a channel (30), wherein at least a first sensor device (10) and a second sensor device (15) according to one of claims 1 to 9 being arranged in the channel at a distance from one another and in a stationary and permanent manner, wherein at least the first one sensor device (10) detects measured variables and the detected measured variables are transmitted wirelessly as measured data to the second sensor device (15) and/or to an interrogation device (20), and wherein the sensor devices are arranged on the inner wall of the channel.

13. Method according to the preceding claim, wherein the interrogation device (20) emits a trigger signal which is received by the first and/or by the second sensor device, wherein the particular sensor device (10; 15), preferably depending on the information transmitted with the trigger signal, transmits the measurement data after receiving the trigger signal.

14. Method according to the preceding claim, wherein the sensor devices (10; 15), after receiving the trigger signal, switch from a sleep mode to an active mode in which the measurement data are transmitted, and switch to the sleep mode after transmission of the measurement data, wherein the sensor devices (10; 15) detect measured variables in the sleep mode and temporarily store said measured variable in a data memory of the particular sensor device until the sensor devices switch to the active mode.

15. Use of a number of sensor devices (10; 15) for acquiring measured variables in a channel (30) according to the method according to one of claims 12 to 14, wherein each of the sensor devices at least has:
- at least one sensor element (43) for detecting at least one measured variable;
- a data processing device (44) coupled to the at least one sensor element for processing and/or preparing the measured variables detected by the at least one sensor element;
- a transmission module (45) coupled to the data processing device and having an antenna (46) for wireless transmission of the processed and/or prepared measured variables as measurement data to a second sensor device and/or to an interrogation device (20);
- a power supply unit (41) for supplying the at least one sensor element, the data processing device and the transmission module with electrical energy; and
- a housing (40) which receives the at least one sensor element, the data processing device, the transmission module, and the energy supply unit, wherein the housing is designed to be fluid- and airtight and wherein the housing is adapted to be attached in the channel on the inner channel wall,
and wherein the acquired measurement variables are transmitted as measurement data to an interrogation device (20) arranged outside the channel, wherein the measurement data preferably comprises location data which indicate the geographic location of the particular sensor device.

## Revendications

1. Dispositif capteur (10 ; 15) pour l'enregistrement de grandeurs de mesure dans un canal (30), le dispositif capteur étant conçu pour rester en permanence dans le canal, le dispositif capteur comportant au moins :
- au moins un élément capteur (43) pour la détection d'au moins une grandeur de mesure ;
- un dispositif de traitement de données (44) couplé à l'au moins un élément capteur pour traiter et/ou préparer les grandeurs de mesure détectées par l'au moins un élément capteur ;
- un module d'émission (45) couplé au dispositif de traitement de données et comportant une antenne (46) pour la transmission sans fil, vers un deuxième dispositif capteur et/ou vers un dispositif d'interrogation (20), des grandeurs de mesure traitées et/ou préparées, en tant que données de mesure ;
- une unité d'alimentation en énergie (41) pour l'alimentation de l'au moins un élément capteur, du dispositif de traitement de données et du module d'émission en énergie électrique ;
le dispositif capteur comportant un boîtier (40) qui reçoit l'au moins un élément capteur, le dispositif de traitement de données, le module émetteur et l'unité d'alimentation en énergie, le boîtier étant conçu pour être étanche aux fluides et à l'air,
**caractérisé en ce que**
le boîtier est conçu pour être fixé dans le canal, au niveau de la paroi interne du canal.

2. Dispositif capteur selon la revendication précédente, dans lequel l'au moins un élément capteur (43) est choisi dans le groupe comprenant un capteur de température, un capteur de débit, un capteur de niveau, un capteur de pression, un capteur acoustique, un capteur de gaz, un capteur pour détecter la qualité de l'eau et/ou une charge polluante, un capteur d'image, et leurs combinaisons, et/ou dans lequel le dispositif de traitement de données (44) est conçu sous la forme d'un microcontrôleur, d'un microprocesseur ou d'un FPGA (réseau prédiffusé programmable).

3. Dispositif capteur selon l'une des revendications précédentes, dans lequel l'unité d'alimentation en énergie (41) comprend une batterie ou un accumulateur.

4. Dispositif capteur selon l'une des revendications précédentes, dans lequel l'unité d'alimentation en énergie (41) comporte un dispositif de production d'énergie électrique à partir de l'environnement du dispositif capteur, en particulier à partir de la température ambiante et/ou du flux d'air dans le canal, le dispositif de production d'énergie électrique étant couplé à l'accumulateur pour charger celui-ci.

5. Dispositif capteur selon l'une des revendications précédentes, le dispositif capteur comportant un module de réception pourvu d'une antenne pour la réception sans fil de données de mesure à partir d'un troisième dispositif capteur, le module de réception et le module d'émission étant de préférence conçus sous la forme d'une unité réalisée comme un module d'émission/de réception pourvu d'une antenne, et le dispositif capteur étant conçu pour stocker les données de mesure reçues dans une mémoire de données (42) du dispositif capteur et/ou pour les transmettre au deuxième dispositif capteur et/ou au dispositif d'interrogation (20).

6. Dispositif capteur selon l'une des revendications précédentes, dans lequel le dispositif de traitement de données (44) et le module d'émission (45) sont conçus pour transmettre les données de mesure sous la forme d'au moins un paquet de données (60), le paquet de données présentant un en-tête et une charge utile, au moins un identifiant unique (61) du dispositif capteur étant contenu dans l'en-tête, et au moins les données de mesure étant contenues dans la charge utile.

7. Dispositif capteur selon l'une des revendications précédentes, le dispositif capteur étant conçu pour basculer de préférence cycliquement entre un mode veille et un mode actif, et/ou le dispositif capteur étant conçu pour passer du mode veille au mode actif après réception d'un signal de déclenchement, le signal de déclenchement présentant de préférence un identifiant du dispositif capteur à activer.

8. Dispositif capteur selon l'une des revendications précédentes, dans lequel un identifiant de capteur est attribué, le dispositif capteur étant conçu pour transmettre un signal de déclenchement reçu si l'identifiant du dispositif capteur à activer ne correspond pas à l'identifiant de capteur, et le dispositif capteur étant en outre conçu pour transmettre un paquet de données reçu (60) conformément à un trajet prédéterminé, et/ou le dispositif capteur étant conçu pour rester en mode actif pendant un temps prédéterminé après la réception d'un signal de déclenchement.

9. Dispositif capteur selon l'une des revendications précédentes, ledit dispositif comportant un dispositif destiné à fournir des données de localisation comprenant l'emplacement géographique du dispositif capteur, les données de localisation étant transmises conjointement avec les données de mesure au deuxième dispositif capteur et/ou à un dispositif d'interrogation (20), ou les données de mesure comprenant les données de localisation.

10. Système capteur pour l'enregistrement de grandeurs de mesure dans un canal (30), comportant un certain nombre de dispositifs capteurs (10 ; 15) selon l'une des revendications précédentes, les dispositifs capteurs pouvant être disposés de manière fixe et permanente dans le canal à des intervalles prédéterminés, la distance entre deux dispositifs capteurs étant choisie de sorte qu'une liaison de communication sans fil puisse être établie entre eux pour la transmission des grandeurs de mesure.

11. Système capteur selon la revendication précédente, dans lequel au moins un dispositif capteur parmi la pluralité de dispositifs capteurs est réalisé sous la forme d'un dispositif capteur maître (15) et les autres dispositifs capteurs parmi la pluralité de dispositifs capteurs sont réalisés sous la forme de dispositifs capteurs esclaves (10), les dispositifs capteurs esclaves (10) étant conçus, pour transmettre des grandeurs de mesure détectées aux dispositifs capteurs maîtres (15), et les dispositifs capteurs maîtres (15) étant conçus pour stocker les grandeurs de mesure reçues et/ou pour les transmettre à un dispositif d'interrogation (20) du système capteur.

12. Procédé d'enregistrement de grandeurs de mesure dans un canal (30), selon lequel au moins un premier dispositif capteur (10) et un deuxième dispositif capteur (15) selon l'une des revendications 1 à 9 sont disposés dans le canal à distance l'un de l'autre et de manière fixe et permanente, au moins le premier dispositif capteur (10) détectant des grandeurs de mesure et transmittant les grandeurs de mesure détectées sans fil au deuxième dispositif capteur (15) et/ou à un dispositif d'interrogation (20), en tant que données de mesure, et les dispositifs capteurs sont disposés sur la paroi interne du canal.

13. Procédé selon la revendication précédente, selon lequel le dispositif d'interrogation (20) émet un signal de déclenchement qui est reçu par le premier et/ou par le deuxième dispositif capteur, le dispositif capteur respectif (10 ; 15), transmettant les données de mesure après réception du signal de déclenchement, de préférence en fonction des informations transmises avec le signal de déclenchement.

14. Procédé selon la revendication précédente, selon lequel les dispositifs capteurs (10 ; 15) passent d'un mode veille à un mode actif dans lequel les données de mesure sont transmises après réception du signal de déclenchement, et passent au mode veille après transmission des données de mesure, les dispositifs capteurs (10 ; 15) détectant des grandeurs de mesure en mode veille et les stockant temporairement dans une mémoire de données du dispositif capteur respectif au moins jusqu'à ce que les dispositifs capteurs passent en mode actif.

15. Utilisation d'un certain nombre de dispositifs capteurs (10 ; 15) pour l'enregistrement de grandeurs de mesure dans un canal (30) conformément au procédé selon l'une des revendications 12 à 14, chacun des dispositifs capteurs comportant au moins :
- au moins un élément capteur (43) pour la détection d'au moins une grandeur de mesure ;
- un dispositif de traitement de données (44) couplé à l'au moins un élément capteur pour traiter et/ou préparer les grandeurs de mesure détectées par l'au moins un élément capteur ;
- un module d'émission (45) couplé au dispositif de traitement de données et comportant une antenne (46) pour la transmission sans fil, vers un deuxième dispositif capteur et/ou vers un dispositif d'interrogation (20), des grandeurs de mesure traitées et/ou préparées, en tant que données de mesure ;
- une unité d'alimentation en énergie (41) pour l'alimentation de l'au moins un élément capteur, du dispositif de traitement de données et du module d'émission en énergie électrique ; et
- un boîtier (40) qui reçoit l'au moins un élément capteur, le dispositif de traitement de données, le module émetteur et l'unité d'alimentation en énergie, le boîtier étant conçu pour être étanche aux fluides et à l'air, et le boîtier étant conçu pour être fixé dans le canal, au niveau de la paroi interne du canal,
et les grandeurs de mesure enregistrées étant transmises en tant que données de mesure à un dispositif d'interrogation (20) disposé à l'extérieur du canal, les données de mesure comprenant de préférence des données de localisation qui indiquent l'emplacement géographique du dispositif capteur respectif.
